# FASCICULE DE BREVET EUROPEEN

(11) **EP 2 256 713 B1**
(45) Date de publication et mention de la délivrance du brevet: **08.02.2012**
(21) Numéro de dépôt: 10163946.6
(22) Date de dépôt: 26.05.2010
(51) Int. Cl.: G09F 3/00, G09F 3/12, G06K 19/04

(54) **Plaquette d'identification pour palettes de manutention en bois**
Signierelement zum Kennzeichnen von Holzpaletten
Identification tag for wooden pallets

(30) Priorité: 28.05.2009 FR 0953526
(43) Date de publication de la demande: 01.12.2010
(73) Titulaire: JP Grosfilley, 01100 Martignat (FR)
(72) Inventeur: Grosfilley, Jean Pierre, 01100, Martignat (FR)
(74) Mandataire: Chevalier, Renaud Philippe

(56) Documents cités:
- FR-A- 2 810 436
- FR-A- 2 902 222
- FR-A- 2 913 134

## Description

La présente invention concerne, d'une façon générale, la traçabilité d'objets en bois et, plus particulièrement, l'identification des palettes de manutention en bois, cette invention étant applicable dans les domaines de la logistique et du contrôle.

Les moyens traditionnels d'identification des objets en bois, tels que par exemple le marquage au fer ou à la peinture, ont déjà fortement évolué vers des solutions plus techniques, procurant une véritable traçabilité de ces objets et, en particulier, des palettes de manutention en bois. Ces solutions tendent actuellement vers des plaquettes d'identification qui sont insérées dans les pieds ou les plots des palettes.

Ainsi les brevets français FR 2 895 549, FR 2 902 222 et FR 2 913 134 qui est consideré comme l'état de la technique le plus proche, décrivent déjà des plaquettes d'identification spécifiques qui se fixent dans les pieds ou plots des palettes de manutention. D'autres documents, tels que les brevets français FR 2 673 026, FR 2 718 554 et FR 2 810 436, décrivent des solutions analogues applicables à l'identification d'autres objets en bois, tels que des grumes.

D'une manière générale, les plaquettes d'identification décrites dans ces documents comprennent une face supérieure sensiblement plane, prévue pour prendre place à l'extérieur de l'objet en bois à identifier, contre la surface de cet objet, et au moins une patte de fixation qui s'étend perpendiculairement à la face supérieure et qui est prévue pour être insérée dans un logement correspondant, creusé dans l'objet en bois, par exemple dans un pied ou plot de palette de manutention en bois.

Comme le montrent les documents ci-dessus mentionnés, les plaquettes d'identification connues dans ce domaine, et en particulier celles utilisées pour l'identification des palettes de manutention en bois, comportent déjà des moyens détectables à distance, désignés comme étiquette électronique, puce électronique, transpondeur ou « RFID » (Radio Frequency Identification) qui sont capables de mémoriser et de transmettre des informations d'identification de l'objet en bois associé, pour réaliser une traçabilité de haute performance. De tels moyens d'identification peuvent être placés sur la face supérieure plane de la plaquette d'identification ; toutefois profitant de la miniaturisation de ces moyens, il a déjà été proposé de les loger à l'intérieur d'une patte de fixation de la plaquette, la patte de fixation étant dans ce cas réalisée creuse pour recevoir le moyen d'identification tel que « RFID » -voir les brevets FR 2 902 222 et FR 2 913 134 précités. Comme on le conçoit facilement, le logement du moyen d'identification dans la patte de fixation, qui elle-même prend place dans une cavité de l'objet en bois à identifier, en particulier une cavité creusée dans un pied ou plot de palette, assure déjà une certaine protection mécanique dudit moyen d'identification en le mettant à l'abri des chocs et des prédations de toute nature, y compris celles de nature frauduleuse, et ceci pour toute la durée de vie de la palette.

Toutefois, les brevets précités ne solutionnent pas le problème de la protection des moyens d'identification contre l'humidité et en particulier contre l'eau. Ceci s'explique par le fait que lesdits moyens d'identification sont généralement fabriqués en une production de masse, pour les besoins de nombreuses industries et activités commerciales qui correspondent à des applications dans un milieu ne présentant pas de risque significatif de détérioration. Par exemple, il s'agit d'étiquettes électroniques adhésives, posées sur des emballages en carton contenant des produits de nature diverse destinés à la grande consommation, et en général consommés dans un relativement bref délai. Tel n'est pas le cas des puces électroniques ou « RFID » intégrées dans les plaquettes d'identification des palettes de manutention, lesquelles puces doivent être protégées non seulement contre les chocs et les coups, mais aussi vis-à-vis d'expositions diverses telles que l'eau et l'humidité ambiante, afin de garantir à moyen et long terme le niveau élevé de traçabilité requis.

On connaît certes des plaquettes d'identification qui intègrent des moyens d'identification par radiofréquence du type dit « GLASSTAG », dans lesquelles les éléments constitutifs que sont la puce électronique et son antenne sont logés dans une capsule en verre, donc étanche. La capsule en verre conserve néanmoins un risque non négligeable de cassure, dans les cas de chocs violents sur les palettes, causés par exemple par les fourches des engins de manutention utilisées avec ces palettes.

Les moyens d'identification à ultra-haute fréquence (RFID UHF) sont, par la nature de leurs fréquences qui sont voisines de celle de l'eau, très sensibles à la présence de l'eau et ne fonctionnent donc pas à proximité d'eau ou d'éléments chargés d'eau. Cette sensibilité à l'eau est fortement aggravée pour des palettes de manutention appelées à être utilisées sur une durée de plusieurs années, au cours de laquelle elles s'imbibent d'humidité.

Dans le cas de l'utilisation de moyens d'identification plus ordinaires, telles que les étiquettes électroniques adhésives actuellement courantes, ces dernières sont exposées et peuvent être rendues hors service si elles ne sont pas protégées contre l'eau et l'humidité ambiante, inévitablement présentes sur les lieux habituels d'utilisation ou de stockage des palettes de manutention que sont les parcs des entreprises, les cales des navires, les véhicules tels que camions et wagons de chemin de fer, et plus généralement tous moyens de transport.

Ainsi, quel que soit le type de moyens d'identification utilisé sur une plaquette d'identification du genre ici concerné, le problème de la protection de ces moyens d'identification contre l'eau et l'humidité, en combinaison avec la protection contre les chocs, reste actuellement posé.

La présente invention vise à remédier aux inconvénients précédemment exposés des plaquettes d'identification actuelles avec moyens d'identification par radiofréquence, en fournissant une solution qui garantit l'étanchéité du compartiment de ces plaquettes recevant lesdits moyens.

A cet effet, l'invention a pour objet une plaquette d'identification pour palettes de manutention en bois, la plaquette d'identification comprenant une face supérieure sensiblement plane, et au moins une patte de fixation qui s'étend perpendiculairement à la face supérieure et qui est prévue pour être insérée dans un logement correspondant, creusé dans un pied ou plot d'une palette en bois, la patte de fixation possédant un compartiment interne dans lequel est logé au moins un moyen d'identification détectable à distance, notamment par radiofréquence et plus particulièrement par ultra haute fréquence, cette plaquette d'identification étant essentiellement caractérisée par le fait que la patte de fixation, de conformation tubulaire, est fermée à son extrémité opposée à la face supérieure de la plaquette par un obturateur comportant, orientée parallèlement à son axe et de préférence contenant cet axe, une paroi sensiblement plate s'étendant à l'intérieur du compartiment précité et supportant le ou les moyens d'identification détectables à distance, la mise en place de l'obturateur rendant étanche le compartiment interne de la patte de fixation.

Dans une forme de réalisation préférée de la plaquette d'identification objet de l'invention, l'étanchéité du compartiment interne de la patte de fixation est obtenue par serrage d'une zone périphérique de l'obturateur contre la paroi intérieure de la patte de fixation, et cette étanchéité est renforcée par un joint annulaire périphérique de l'obturateur, mis en compression lors de la mise en place de l'obturateur.

Avantageusement, l'obturateur comprenant le joint d'étanchéité est réalisé en une seule pièce par un procédé de moulage par injection de type « bi-matière », le corps de l'obturateur étant réalisé dans une première matière synthétique tandis que le joint est réalisé dans une seconde matière synthétique, moins rigide que la première, pour obtenir une compression adéquate de ce joint en vue d'assurer l'étanchéité recherchée.

Ainsi, l'invention propose, pour la plaquette d'identification, une structure qui, tout en restant simple et économique, rend étanche le compartiment interne de cette plaquette d'identification qui reçoit le ou les moyens d'identification par radiofréquence. En particulier, l'obturateur avantageusement pourvu d'un joint rend ce compartiment inaccessible à l'eau, ainsi qu'à tous autres corps étrangers. De plus, ledit obturateur sert au support desdits moyens d'identification, par l'intermédiaire de sa paroi s'étendant suivant l'axe de l'obturateur, donc aussi suivant l'axe central de la patte de fixation.

Ainsi, le ou les moyens d'identification sont maintenus sur l'obturateur dans une position centrale à distance de la paroi intérieure de la patte de fixation, de sorte que ces moyens ne risquent pas une quelconque détérioration par suite d'un choc qui leur serait transmis par la paroi de la plaquette d'identification, ou par suite d'un contact et frottement contre cette paroi lors de l'enfoncement de l'obturateur. Dans le même ordre d'idées, le joint d'étanchéité joue aussi un rôle d'amortisseur qui contribue à protéger mécaniquement les moyens d'identification contre les effets destructeurs des chocs et des vibrations.

Dans la conception le plus simple, la paroi précitée de l'obturateur porte un unique moyen d'identification, sur une seule de ses deux faces. Toutefois, cette paroi de l'obturateur peut aussi porter des moyens d'identification sur ses deux faces. Ainsi, ladite paroi peut porter, respectivement sur ses deux faces, deux étiquettes électroniques accordées sur des fréquences distinctes, ce qui permet d'identifier d'une part la palette elle-même, et d'autre part le chargement ou contenu de cette palette, en procurant ainsi une « double traçabilité ».

Dans la mesure où la patte de fixation de la plaquette d'identification possède une section de forme circulaire ou ovale ou oblongue, la position centrale de la paroi de l'obturateur portant le ou les moyens d'identification ménage encore, dans le compartiment interne de la patte de fixation, un espace vide qui peut recevoir des moyens additionnels de traçabilité ou de contrôle autres que les moyens d'identification et utiles dans certaines applications.

Il s'agit, par exemple, de dispositifs de contrôle de temps et de température qui servent au contrôle de la bonne application de normes de séchage des bois. Bien entendu, la localisation de ces moyens de traçabilité ou de contrôle à l'intérieur du compartiment de la patte de fixation, obturé de façon étanche, permet aussi de maintenir ces moyens additionnels dans une zone étanche, comme les moyens d'identification proprement dits, ceci conformément au but premier de la présente invention.

La localisation des moyens d'identification, et le cas échéant des moyens additionnels de traçabilité et de contrôle, dans un compartiment fermé, a aussi pour avantage de protéger ces moyens contre les vols, les fraudes et autres actions mal intentionnées. Cette protection anti-fraude peut encore être renforcée par une zone ruptible, telle qu'une zone d'épaisseur réduite, prévue entre la face supérieure de la plaquette d'identification et la patte de fixation de la même plaquette.

Ainsi, une tentative d'extraction de la plaquette d'identification se soldera par l'arrachement de la seule face supérieure, laissant en place la patte de fixation avec les moyens d'identification, donc par un échec de la tentative de fraude qui, de surcroît, laissera visible cette tentative de fraude.

L'invention sera mieux comprise à l'aide de la description qui suit, en référence au dessin schématique annexé représentant, à titre d'exemple, une forme d'exécution de cette plaquette d'identification pour palettes de manutention en bois.
Figure 1 est une vue partielle, en perspective, d'une palette de manutention équipée d'une plaquette d'identification conforme à la présente invention,
Figure 2 représente, à plus grande échelle, un plot de la palette de la figure 1 muni de la plaquette d'identification,
Figure 3 est une vue générale, en perspective, de la plaquette d'identification seule,
Figure 4 est une vue en coupe simplifiée de cette plaquette d'identification montée sur un plot de palette,
Figure 5 est en une vue en coupe passant par l'axe central de la plaquette d'identification,
Figure 6 est un détail agrandi de la figure 5,
Figure 7 est une autre vue en coupe passant par l'axe central de la plaquette d'identification, cette coupe étant faite selon un plan perpendiculaire à celui de la figure 5,
Figure 8 représente l'obturateur de la plaquette d'identification des figures précédentes, avec les moyens d'identification, avant son introduction dans la patte de fixation.

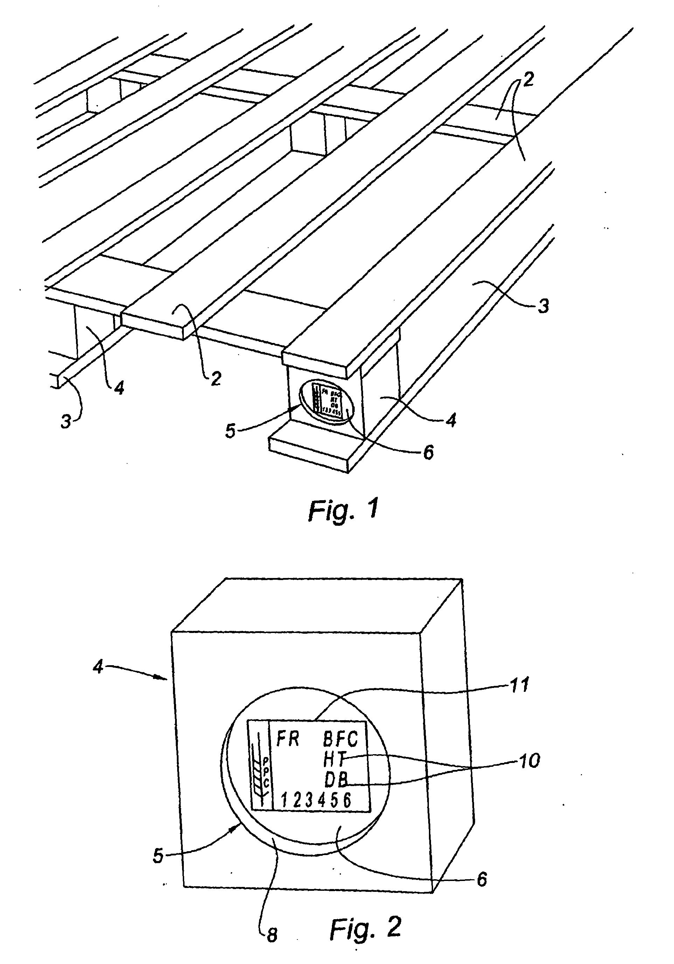

Les figures 1 et 2 rappellent la structure habituelle d'une palette de manutention en bois, qui comporte des lattes supérieures 2 entrecroisées et des lattes inférieures 3, raccordées entre elles par des plots 4 en bois de forme cubique ou parallélépipédique. Un plot 4, ou deux plots diagonalement opposés de cette palette, comportent sur une face latérale une plaquette d'identification 5, qui possède une face supérieure 6 apparente.

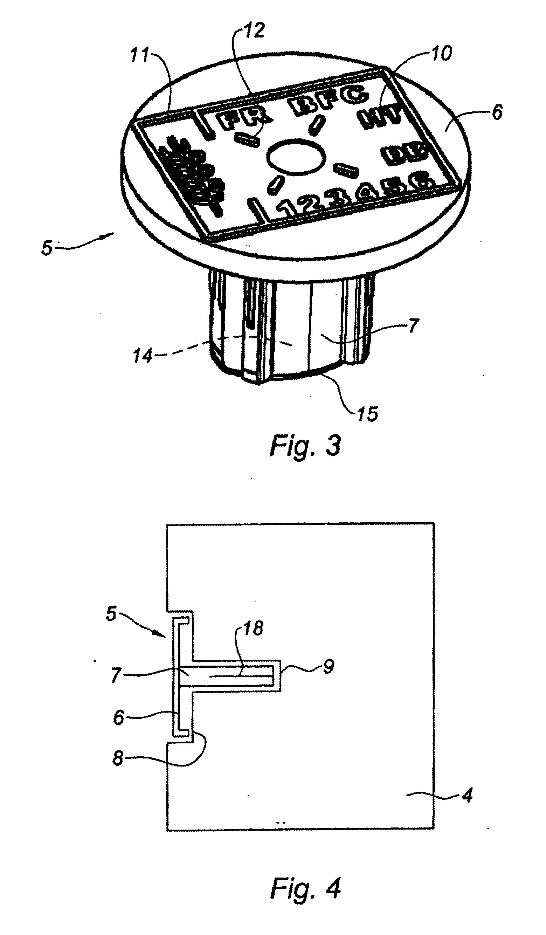

Comme le montre la figure 3, la plaquette d'identification 5 comprend, d'une façon générale, la face supérieure 6 sensiblement plane et ici de forme circulaire, et une patte de fixation 7 qui s'étend sous la face supérieure 6, perpendiculairement à cette face supérieure 6. En se référant à la figure 4, la face supérieure 6 de la plaquette d'identification 5 prend place dans un lamage 8 du plot 4, tandis que la patte de fixation 7 de cette plaquette d'identification 5 est introduite dans un logement 9 correspondant, creusé dans le plot 4. Des nervures longitudinales, formées sur l'extérieur de la patte de fixation 7, assurent son guidage et son positionnement dans le logement 9 du plot 4. La face supérieure de la plaquette d'identification 5 comporte des marquages 10 visibles en relief ou en creux, qui peuvent être entourés par un cadre rectangulaire 11. La zone centrale de la face supérieure 6 comporte aussi des renforts de protection 12, de hauteur supérieure à celle des marquages 10, qui évitent d'abîmer ces marquages 10 lorsque la plaquette d'identification 5 est frappée à l'aide d'un outil en vue de l'enfoncement de la patte de fixation 7 dans le logement 9.

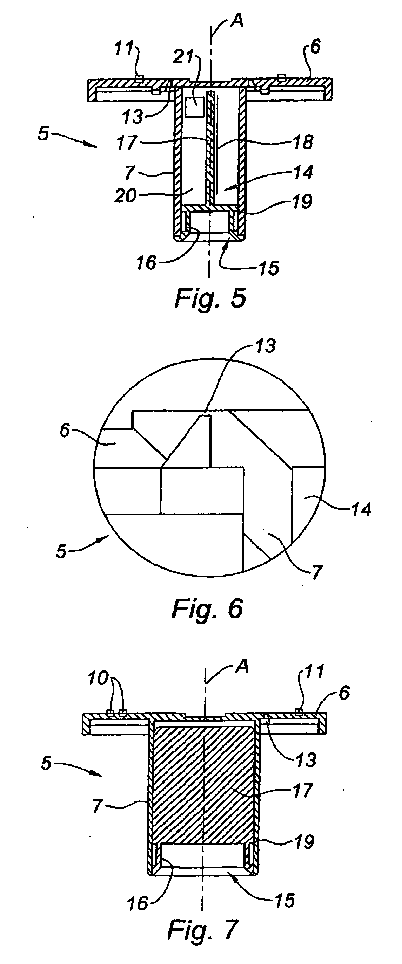

La zone périphérique de la face supérieure 6 est raccordée à la zone centrale de cette face 6 par une zone d'épaisseur réduite 13 résultant d'une rainure en « V » (voir figure 5 et surtout figure 6). La zone d'épaisseur réduite 13 permet une rupture de la face supérieure 6 et son détachement de la patte de fixation 7, rendant ainsi visible une fraude ou tentative de fraude par une manipulation d'extraction hors du plot 4 de la palette.

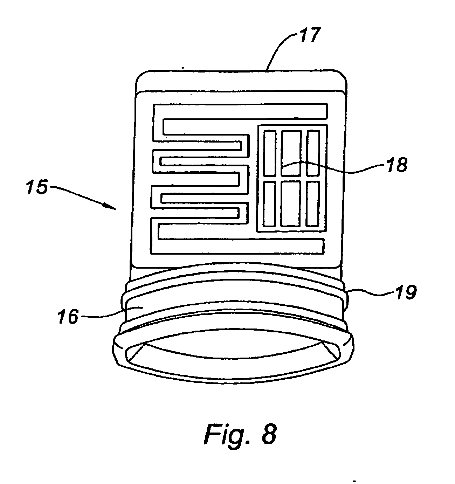

La patte de fixation 7 possède une conformation creuse tubulaire, ici de section ovale, la paroi de cette patte de fixation 7 délimitant ainsi un compartiment interne 14. A son extrémité adjacente à la face supérieure 6 de la plaquette 5, le compartiment 14 est fermé de façon étanche par la zone centrale de la face supérieure 6. A son extrémité éloignée de cette face supérieure 6, le compartiment 14 de la patte de fixation 7 est fermé par la mise en place d'un obturateur 15, représenté seul sur la figure 8.

L'obturateur 15 possède un corps principal 16, dont le contour correspond à la section ovale de la patte de fixation 7. Le corps principal 16 de l'obturateur 15 est prolongé par une paroi plate 17, de forme générale rectangulaire, qui se situe dans un plan médian contenant l'axe central A de l'obturateur 15. Sur une face de la paroi plate 17 est fixé un moyen d'identification 18 adhésif, détectable à distance par radiofréquence, ici préférentiellement de type « RFID UHF ».

L'obturateur 15 est introduit dans l'extrémité inférieure, initialement ouverte, de la patte de fixation 7, et il est maintenu par un serrage léger contre la paroi intérieure de cette patte de fixation 7, de manière à fermer le compartiment 14, en le rendant inaccessible à l'eau et à tous autres agents ou corps étrangers. De cette manière, comme le montrent les figures 5 et 7, le moyen d'identification 18 supporté par la paroi 17 est enfermé dans le compartiment interne 14 de la patte de fixation 7, en restant maintenu à distance de la paroi intérieure de cette patte de fixation 7. Plus particulièrement, compte tenu de la section ovale de la patte de fixation 7, la paroi 17 et le moyen d'identification 18 sont orientés suivant le grand axe de cette section ovale.

Le serrage léger de la zone périphérique de l'obturateur 15 contre la paroi intérieure de la patte de fixation 7 procure déjà une étanchéité continue, protégeant de l'eau et de l'humidité le compartiment 14 et les éléments logés à l'intérieur de ce compartiment 14. L'étanchéité est renforcée par un joint périphérique continu 19, semi-souple, disposé dans la zone périphérique du corps 16 de l'obturateur 15, sous l'épaulement supérieur de ce corps 16. Une fois l'obturateur 15 mis en place dans la patte de fixation 7, le joint 19 est comprimé, ce qui rend l'étanchéité permanente et durable, rendant le compartiment 14 définitivement inaccessible à l'eau et à tous agents et corps étrangers.

Le corps 16 de l'obturateur 15, avec la paroi 17, et le joint d'étanchéité 19, sont réalisés en une seule pièce monobloc, par un procédé de moulage par injection de type « bi-matière ». Le corps 16 de l'obturateur 15 est ainsi réalisé dans une première matière synthétique relativement rigide, par exemple en polypropylène. Le joint 19 est réalisé dans une autre matière synthétique plus souple que celle du corps 16, par exemple en thermoplastique élastomère (TPE), pour posséder les qualités requises de compressibilité assurant l'étanchéité de l'obturation du compartiment 14.

La position centrale de la paroi 17 et du moyen d'identification 18, à l'intérieur du compartiment 14, ménage dans ce compartiment 14 un espace vide résiduel 20 qui s 'étend de part et d'autre de la paroi 17. Cet espace vide 20 peut être mis à profit pour loger, également en zone étanche, des dispositifs additionnels 21 de traçabilité ou de contrôle. Il s'agit, par exemple, d'une matière dont la consistance est modifiée en cas d'exposition à une certaine température pendant un certain temps, ceci pour le contrôle de l'application des normes de séchage des bois, telles que la norme internationale NIMP 15 de protection phytosanitaire des frontières par attaques d'insectes pouvant provoquer des déforestations.

On notera qu'en cas d'arrachement de la zone périphérique de la face supérieure 6 de la plaquette d'identification 5, et compte tenu de la position de la zone d'épaisseur réduite 13, le compartiment interne 14 de la patte de fixation 7 reste fermée dans sa partie supérieure, ce qui garantit la non accessibilité et l'étanchéité du compartiment 14 et des éléments logés dans celui-ci, notamment le moyen d'identification 18 et les éventuels dispositifs additionnels 21 de traçabilité ou de contrôle.

La structure de la plaquette d'identification 5 permet une production industrielle automatisée de celle-ci, pour répondre à la demande de traçabilité des palettes de manutention en bois.

On ne s"éloignerait pas du cadre de l'invention, telle que définie dans les revendications annexées :
- en modifiant les formes de détail de la plaquette d'identification, par exemple la section de sa patte de fixation,
- en réalisant l'obturateur en toutes matières appropriées, et par tout procédé convenable,
- en remplaçant la zone d'épaisseur réduite de la face supérieure par tout autre affaiblissement local, résultant par exemple de ponts de matière ruptibles ou d'une zone intermédiaire en une matière différente,
- en prévoyant, en fonction de l'application de cette plaquette d'identification, des dispositifs additionnels de traçabilité ou de contrôle de toute nature, éventuellement placés sur les deux faces de la paroi médiane,
- en appliquant la même plaquette d'identification à d'autres domaines dans lesquels l'étanchéité est requise pour protéger des moyens d'identification détectables à distance.

## Revendications

1. Plaquette d'identification pour palettes de manutention en bois, la plaquette d'identification (5) comprenant une face supérieure (6) sensiblement plane, et au moins une patte de fixation (7) qui s'étend perpendiculairement à la face supérieure (6) et qui est prévue pour être insérée dans un logement (9) correspondant, creusé dans un pied ou plot (4) d'une palette en bois (2, 3), la patte de fixation (7) possédant un compartiment interne (14) dans lequel est logé au moins un moyen d'identification (18) détectable à distance, notamment par radiofréquence et plus particulièrement par ultra haute fréquence, la patte de fixation (7), de conformation tubulaire, étant fermée à son extrémité opposée à la face supérieure (6) de la plaquette (5) par un obturateur (15) **caractérisée en ce que** l'obturateur comporte, orientée parallèlement à son axe (A) et de préférence contenant cet axe (A), une paroi (17) sensiblement plate s'étendant à l'intérieur du compartiment (14) précité et supportant le ou les moyens d'identification (18) détectables à distance, la mise en place de l'obturateur (15) rendant étanche le compartiment interne (14) de la patte de fixation. (7)

2. Plaquette d'identification selon la revendication 1, **caractérisée en ce que** l'étanchéité du compartiment interne (14) de la patte de fixation (7) est obtenue par serrage d'une zone périphérique de l'obturateur (15) contre la paroi intérieure de la patte de fixation (7), et **en ce que** cette étanchéité est renforcée par un joint annulaire (19) de l'obturateur (15), mis en compression lors de la mise en place de l'obturateur (15).

3. Plaquette d'identification selon la revendication 2, **caractérisée en ce que** l'obturateur (15) comprenant le joint d'étanchéité (19) est réalisé en une seule pièce par un procédé de moulage par injection de type « bi-matière », le corps (16) de l'obturateur (15) étant réalisé dans une première matière synthétique tandis que le joint (19) est réalisé dans une seconde matière synthétique, moins rigide que la première.

4. Plaquette d'identification selon l'une quelconque des revendications 1 à 3, **caractérisée en ce que** la paroi 17 de l'obturateur (15) porte des moyens d'identification (18) sur ses deux faces.

5. Plaquette d'identification selon l'une des revendications 1 à 4, **caractérisée en ce que** le ou les moyens d'identification (18) sont maintenus, sur l'obturateur (15), dans une position centrale à distance de la paroi intérieure de la patte de fixation (7).

6. Plaquette d'identification selon la revendication 5, **caractérisée en ce que** la patte de fixation (7) de cette plaquette (5) possède une section de forme circulaire ou ovale ou oblongue, et **en ce que** la position centrale de la paroi (17) de l'obturateur (15) portant le ou les moyens d'identification (18) ménage encore, dans le compartiment interne (14) de la patte de fixation (7), un espace vide (20) apte à recevoir des moyens additionnels de traçabilité ou de contrôle (21) autres que les moyens d'identification (18).

7. Plaquette d'identification selon l'une des revendications 1 à 6, **caractérisée en ce qu'**est prévue une zone ruptible (13), telle qu'une zone d'épaisseur réduite, entre la face supérieure (6) de la plaquette d'identification (5) et la patte de fixation (7) de la même plaquette (5).

## Claims

1. An identification tag for wooden handling pallets, the identification tag (5) comprising a substantially planar upper face (6), and at least one attachment tab (7), which extends perpendicularly to the upper face (6), and which is provided in order to be inserted into a corresponding housing (9), hollowed out in a leg or block (4) of a wooden pallet (2, 3), the attachment tab (7) having an internal compartment (14) in which is housed at least one identification means (18), remotely detectable notably via a radio frequency, and more particularly via an ultrahigh frequency, the attachment tab (7) with a tubular shape being closed at its end opposite to the upper face (6) of the plate (5) by an obturator (15) **characterized in that** the obturator (15) includes, oriented parallel to its axis (A), and preferably containing this axis (A), a substantially flat wall extending in the inside of the aforementioned compartment (14) and supporting the remotely detectable identification means (18), the setting into place of the obturator (15) sealing the internal compartment (14) of the attachment tab (7).

2. The identification tag according to claim 1, **characterized in that** the seal of the internal compartment (14) of the attachment tab (7) is obtained by tightening a peripheral area of the obturator (15) against the inner wall of the attachment tab (7), and **in that** this seal is reinforced by an annular gasket (19) of the obturator (15), compressed during the setting into place of the obturator (15).

3. The identification tag according to claim 2, **characterized in that** the obturator (15) comprising the seal gasket (19) is made in a single part by an injection molding method of the « bimaterial » type, the body (16) of the obturator (15) being made in a first synthetic material, while the gasket (19) is made in a second synthetic material, less rigid than the first.

4. The identification tag cable according to any of claims 1 to 3, **characterized in that** the wall (17) of the obturator (15) bears identification means (18) on both of its faces.

5. The identification tag according to one of claims 1 to 4, **characterized in that** the identification means (18) is(are) maintained on the obturator (15) in a central position at a distance from the inner wall of the attachment tab (7).

6. The identification tag according to claim 5, **characterized in that** the attachment tab (7) of this tag (5) has a section of a circular or oval or oblong shape, and **in that** the central position of the wall (17) of the obturator (15) bearing the identification means (18) further provides in the internal compartment (14) of the attachment tab (7) an empty space (20) capable of receiving additional traceability or control means (21) other than the identification means (18).

7. The identification tag according to one of claims 1 to 6, **characterized in that** a breakable area (13) is provided, so as an area of reduced thickness, between the upper face (6) of the identification tag (5) and the attachment tab (7) of the same tag (5).

## Patentansprüche

1. Signierelement für Transportpaletten aus Holz, wobei das Signierelement (5) eine etwa ebene Oberseite (6) und mindestens einen Befestigungsfuß (7) umfasst, der sich senkrecht zur Oberseite (6) erstreckt und der vorgesehen ist, in eine entsprechende, in einen Fuß oder Klotz (4) einer Holzpalette (2, 3) eingearbeitete Aufnahme (9) eingesetzt zu sein, wobei der Befestigungsfuß (7) einen Innenraum (14) besitzt, in dem mindestens ein aus der Ferne, vor allem durch Funkfrequenz und ganz speziell durch Ultrahochfrequenz feststellbares Signiermittel (18) untergebracht ist, wobei der röhrenförmig ausgebildete Befestigungsfuß (7) an seiner der Oberseite (6) des Elements (5) gegenüberliegenden Seite durch einen Deckel (15) verschlossen ist, **dadurch gekennzeichnet, dass** der Deckel, parallel zu seiner Achse (A) und vorzugsweise diese Achse (A) enthaltend, eine etwa flache Wand (17) aufweist, die sich in dem vorgenannten Raum (14) erstreckt und das oder die aus der Ferne feststellbaren Signiermittel (18) trägt, wobei der Innenraum (14) des Befestigungsfußes (7) durch Platzierung des Deckels (15) abgedichtet wird.

2. Signierelement nach Anspruch 1, **dadurch gekennzeichnet, dass** die Abdichtung des Innenraums (14) des Befestigungsfußes (7) durch Spannen einer peripheren Zone des Deckels (15) gegen die Innenwand des Befestigungsfußes (7) erzielt wird, und dass diese Abdichtung durch eine Ringdichtung (19) des Deckels(15) verstärkt wird, die beim Platzieren des Deckels (15) zusammengedrückt wird.

3. Signierelement nach Anspruch 2, **dadurch gekennzeichnet, dass** der Deckel (15), der die Dichtung (19) umfasst, durch ein formendes Verfahren durch Einspritzen vom Typ "Bi-Material" aus einem einzigen Stück hergestellt ist, wobei der Körper (16) des Deckels (15) aus einem ersten Kunststoff besteht, wogegen die Dichtung (19) aus einem zweiten Kunststoff besteht, der weniger starr als der erste Kunststoff ist.

4. Signierelement nach einem der Ansprüche 1 bis 3, **dadurch gekennzeichnet, dass** die Wand (17) des Deckels (15) Signiermittel (18) auf ihren beiden Seiten trägt.

5. Signierelement nach einem der Ansprüche 1 bis 4, **dadurch gekennzeichnet, dass** das oder die Signiermittel (18) auf dem Deckel (15) in einer zentralen Position von der Innenwand des Befestigungsfußes (7) beabstandet gehalten werden.

6. Signierelement nach Anspruch 5, **dadurch gekennzeichnet, dass** der Befestigungsfuß (7) dieses Elements (5) einen kreisförmigen oder ovalen oder länglichen Querschnitt besitzt, und dass die zentrale Position der Wand (17) des Deckels (15), die das oder die Signiermittel (18) trägt, weiterhin im Innenraum (14) des Befestigungsfußes (7) einen leeren Raum (20) ausbildet, der imstande ist, zusätzliche Rückverfolgbarkeits- oder Kontrollmittel (21) aufzunehmen, die keine Signiermittel (18) sind.

7. Signierelement nach einem der Ansprüche 1 bis 6, **dadurch gekennzeichnet, dass** ein Bruchbereich (13), beispielsweise ein Bereich reduzierter Dicke, zwischen der Oberseite (6) des Signierelements (5) und dem Befestigungsfuß (7) desselben Elements (5) vorgesehen ist.
